(19) Europäisches Patentamt
European Patent Office
Office européen des brevets

(11) **EP 4 520 462 A1**

(12) **EUROPEAN PATENT APPLICATION**

(43) Date of publication:
**12.03.2025 Bulletin 2025/11**

(21) Application number: **23195264.9**

(22) Date of filing: **05.09.2023**

(51) International Patent Classification (IPC):
**B22F 10/20** (2021.01)   **B22F 1/06** (2022.01)
**B22F 1/10** (2022.01)   **B22F 12/50** (2021.01)
**B33Y 10/00** (2015.01)   **B33Y 30/00** (2015.01)
**B33Y 70/00** (2020.01)

(52) Cooperative Patent Classification (CPC):
(C-Sets available)
**B22F 1/06; B22F 1/10; B22F 10/20; B22F 12/50;
B33Y 10/00; B33Y 30/00; B33Y 70/00**        (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **The Provost, Fellows, Foundation
Scholars and the
other members of Board, of the College of the
Holy
and Undivided Trinity of Queen Elizabeth,
Dublin 2 (IE)**

(72) Inventors:
• **ZHANG, Wenyou
Dublin, D04F658 (IE)**

• **LUPOI, Rocco
Dublin, D15EA2K (IE)**
• **BABU, Ramesh Padamati
Dublin, D15NR44 (IE)**
• **COBAN, Asli
Dublin, Dublin 2 (IE)**
• **SASNAUSKAS, Arnoldas
Dublin, Dublin 7 (IE)**
• **ABBOTT, William
Dublin, A83YH52 (IE)**

(74) Representative: **Barker Brettell LLP
100 Hagley Road
Edgbaston
Birmingham, West Midlands B16 8QQ (GB)**

(54) **ADDITIVE MANUFACTURING USING COMPOSITE SHEETS MADE OF METAL POWDER AND POLYMER**

(57)   A metal powder polymer composite sheet (200) is provided for use in additive layer manufacturing. The sheet (200) comprises a metal powder (202) and a polymer (201) that binds the metal powder together to form the sheet (200). The metal powder (202) consists of metal particles with a median aspect ratio of less than 0.8.

Figure 1

EP 4 520 462 A1

**(Cont. next page)**

(52) Cooperative Patent Classification (CPC): (Cont.)

C-Sets
B22F 2998/10, B22F 3/22, B22F 10/20;
B22F 2999/00, B22F 10/20, B22F 7/02

**Description**

FIELD OF INVENTION

The invention relates to feedstock for additive manufacturing, and to products and methods for additive manufacturing.

BACKGROUND

Additive layer manufacturing (ALM), often referred to as 3D printing, is a process by which a component is built up by adding successive material layers with a defined shape. In a number of ALM processes, the material layers initially take the form of a powder, which is deposited and then melted or sintered together using a directed heat source, such as a laser or electron beam. Successive layers of metal powder can be deposited and melted or sintered in a defined pattern to produce a three-dimensional metal component with substantially arbitrary geometry.

Selective laser melting (SLM), which may also be referred to as powder bed fusion (PBF) is a form of additive layer manufacturing in which a solid part is created from a powder material spread with desired thickness on a substrate platform and consolidated by irradiation with a heat source (generally a laser beam, but sometimes an electron beam). Different metallic powders such as steel, titanium alloy and nickel alloy amongst others have been processed via SLM technology for potential applications in space, aviation, automotive and other industries.

In SLM, powder is typically delivered into a working area from a bulk container, and then spread out using a blade or roller to form a layer. The powder thickness per layer is typically in the range of 40 to 300 microns, and large amounts of feedstock powder are typically required. Achieving layers of powder that are substantially uniform in thickness over the working area can be difficult. Any inconsistencies in the powder layers can consolidate into errors in the finished part - leading to potential process and quality variation.

The cost of feedstock powder for additive layer manufacturing can be significant. Many additive layer manufacturing machines are designed to work with very specific feedstock powders. Parameters of a machine for additive layer manufacture are often optimised to work well with prescribed powders. Typically, particle properties that are important for additive layer manufacturing include: particle size and particle size distribution; particle shape; and particle surface morphology. For additive layer manufacture, spherical or spheroidal particles are typically required. More spherical particles have enhanced flowability (reducing agglomerations during deposition), and can therefore more consistently be formed into layers. In addition, more spherical particles typically result in higher packing densities (especially where a distribution of particle sizes is present, since smaller particles can pack voids between larger particles). Feedstock for additive layer manufacturing can be expensive.

WO2020/165193 describes a way of delivering feedstock for additive layer manufacturing in which a metal powder is embedded within a polymer sheet.

A way to reduce the cost of additive layer manufacturing is desirable.

SUMMARY

According to a first aspect, there is provided a metal powder polymer composite sheet for use in additive layer manufacturing, comprising:

> a metal powder;
> a polymer that binds the metal powder together to form the sheet;
> wherein the metal powder consists of metal particles with a median aspect ratio of less than 0.8.

The use of non-spherical particles in additive layer manufacturing has the potential to reduce cost significantly. It has been found that non-spherical powder does not give rise to adverse effects in the context of additive layer manufacturing from a composite sheet, in which a metal powder is bound together to form a sheet by a polymer.

The median aspect ratio may be less than 0.7 or less than 0.6. The median aspect ratio may be greater than 0.3, or 0.4, or 0.5.

The metal powder may comprise particles with a median particle size of between 1 micron and 200 microns, or between 5 microns and 100 microns, or between 10 microns and 80 microns, or between 10 microns and 50 microns. The median particle size (e.g. Dv50) may be determined by a laser diffraction measurement. A particle size in this range may be particularly suitable for additive layer manufacture, lending itself to forming consistent layers at the appropriate thickness, and producing dense, crack-free parts after selective melting.

The coefficient of variation of the particle size (i.e. the standard deviation divided by the mean particle size) may be less than 0.7, or less than 0.6, or less than 0.5, or less than 0.4, or less than 0.3, or less than 0.2. The coefficient of variation of particle size may be at least 0.1, or at least 0.2. The coefficient of variation of particle size may be between 0.1 and 0.7, or between 0.1 and 0.6, or between 0.1 and 0.5. Some variation in particle size may be important for obtaining high packing density and dense parts.

The ratio of density of the polymer and metal powder may be between 1:2 and 1: 10, or between 1:5 and 1: 10.

The polymer may be selected to have a thermal degradation temperature (at which complete vaporisation of the polymer has occurred) that is lower than a melting temperature of the metal powder (e.g. by at least 50 degrees C or at least 100 degrees C). The thermal degradation temperature of the polymer may be between 100 degrees C and 600 degrees C or between 200 degrees C and 500 degrees C. The thermal degradation temperature may be less than 0.9 or 0.8 or 0.7 or 0.6 of the melting point of the metal powder (in K). This may be advantageous, in that the polymer may not be present when full consolidation of the metal powder into a part is taking place, thereby preventing contamination of the part with polymer.

The metal powder may form at least 80% or at least 85% by weight of the composite sheet.

The metal powder may comprise or consist of a material selected from: stainless steel, tungsten, titanium, titanium alloys, aluminium, aluminium alloys, copper, nickel, nickel alloys, silver, gold, platinum, lithium, beryllium, magnesium, zinc, zirconium, niobium, tungsten, tin, lead, and their alloys, super alloys, high entropy alloys, cobalt-chrome, barium, molybdenum, NiTi (nitilon), NiTi alloys, ceramic materials, metal-ceramic composites, metal-diamond composites, tantalum, tantalum carbide, tungsten carbide and combinations thereof.

The polymer may comprise or consist of: a thermoplastic, epoxy, silicone, vulcanised rubber, polyester, polyurethane, polyethylene, polypropylene, polyamide, polyetheramide, polyvinylchloride (PVC), polyvinylidene fluoride (PVDF), a fluoroplastic, polylactic acid (PLA), Polyacrylic acid (PAA), Polyvinylpyrrolidone (PVP), polycaprolactone (PCL), polybutylene succinate (PBS), polyhydroxyalkanoate (PHA), and poly(3-hydroxybutyrate-co-3- hydroxyhexanoate).

A first side of the composite sheet may be higher in polymer content than a second, opposite, side of the composite sheet. The first side may be the bottom side (which may be referred to as the polymer side in embodiments with a high polymer content on that side). The second side may be the top side (which may be referred to as the metal powder side in embodiments with a lower polymer content at that side).

A surface roughness of the first side may be at least 5% lower, or at least 10% lower, or at least 20% lower, or at least 30% lower, than a surface roughness of the second side. The surface roughness (Ra) may be determined by surface profilometry (optical or physical).

A thickness of the sheet may be between 20 microns and 400 microns, or between 50 microns and 300 microns.

According to a second aspect, there is provided a method of manufacturing a component using the composite sheet according to the first aspect (including any optional features of the first aspect), the method comprising:

a) arranging a region of the composite sheet in a working zone above a build plate;
b) applying heat to selected portions of the region of the composite sheet until a fusion temperature of the metal powder is achieved;
c) removing the region of the composite sheet from the working region;
d) repeating steps a) to c) until the component has been built, layer by layer, from the selected portions.

The source of the heat may be a laser beam or an electron beam.

The laser beam may be from a CO2 laser, a 1064 nm infrared Nd:YAG laser, an infrared fibre laser, a diode laser, an argon laser, a krypton laser, an argon/krypton laser, a helium-cadmium laser, a copper vapor laser, a xenon laser, an iodine laser, an oxygen laser, or an excimer laser.

The method may comprise powder bed fusion manufacturing.

The composite sheet may be arranged on input roller, and may be provided to the working zone by unrolling the composite sheet from the input roller.

The composite sheet may be further arranged on an output roller, wherein the composite sheet is received for recycling on the output roller after removal from the working zone.

According to a third aspect, there is provided a method of manufacturing the composite sheet of the first aspect (including any optional features of the first aspect), comprising:

dissolving between about 5 wt% and about 50 wt% of a polymer in an organic solvent to form a polymer solution;
dispersing a metal powder in the polymer solution in a ratio of metal powder to polymer solution of about 10g:2ml to about 2g: 10ml to form a metal-dispersed solution;
casting the metal-dispersed solution on to a casting surface; and
drying the cast metal-dispersed solution to form the composite sheet.

The ratio of metal powder to polymer solution may be between about 1g:2ml and about 2g: 1ml, or between about 8g: 10ml to about 20g: 10ml.

The organic solvent may be selected from acetone, chloroform, N-methyl formamide, tetrahydrofuran, cyclohexane, dimethylacetamide, dimethylsulphoxide, dimethylformamide, butanol, ethanol, methyl ethyl ketone, and diacetone alcohol.

The polymer dispersion may be between about 5 wt% and about 30 wt% polycaprolactone in chloroform.

The polymer solution may be between about 5 wt% and about 30 wt% polyvinylidene fluoride (PVDF) in acetone.

Optional features of each aspect described above, and in the detailed description, may be combined with the features of every other aspect. Methods for making composite sheets may be adapted to form composite sheets according to specific embodiments described herein, for example. Methods of making parts with composite sheets may comprise using composite sheets with any of the features described herein.

DETAILED DESCRIPTION

Example embodiments will be described, with reference to the accompanying drawings, in which:

Figure 1 is a schematic view of an apparatus of manufacturing a component from a composite sheet comprising non-spherical metal powder;

Figure 2 is (a) a scanning electron microscope (SEM) image of a spherical powder, (b) an SEM image of a non-spherical powder, (c) a graph showing the size distribution of the spherical powder, and (d) a graph showing the size distribution of the non-spherical powder;

Figure 3 shows a solution casting process for forming a composite sheet;

Figure 4 shows SEM images of composite sheets, with: (a) powder side, (b) polymer side, and (c) showing a cross section of the spherical powder sheet; and (d) powder side, (e) polymer side, and (f) showing a cross section of the non-spherical powder sheet;

Figure 5 is graph of a thermal gravimetric analysis of composite sheets comprising spherical and non-spherical metal powder;

Figure 6 shows optical micrographs of polished cross sections of 30-layer sample components printed by using composite sheets, showing geometry and density at three different laser scanning speeds;

Figure 7 shows SEM images of top surfaces of sample components formed from composite sheets comprising non-spherical metal powder, manufactured at different laser defocuses and different scanning speeds;

Figure 8 shows optical micrographs of polished cross sectional surfaces of parts formed from composite sheets comprising non-spherical metal powder, manufactured by at different laser defocuses and different scanning speeds;

Figure 9 is (a) a graph of density with respect to laser defocus for different laser scan speeds; and (b) a graph of height with respect to laser defocus for different laser scan speeds;

Figure 10 shows optical micrographs of polished cross sections of parts formed from composite sheets comprising non-spherical particles, showing geometry and density of with different ratios of metal powder to polymer in the composite sheet; and

Figure 11 shows an optical micrographs of polished cross sections of parts formed from composite sheets comprising non-spherical particles showing geometry and density of samples by using a 250 micron nominal thickness composite sheet.

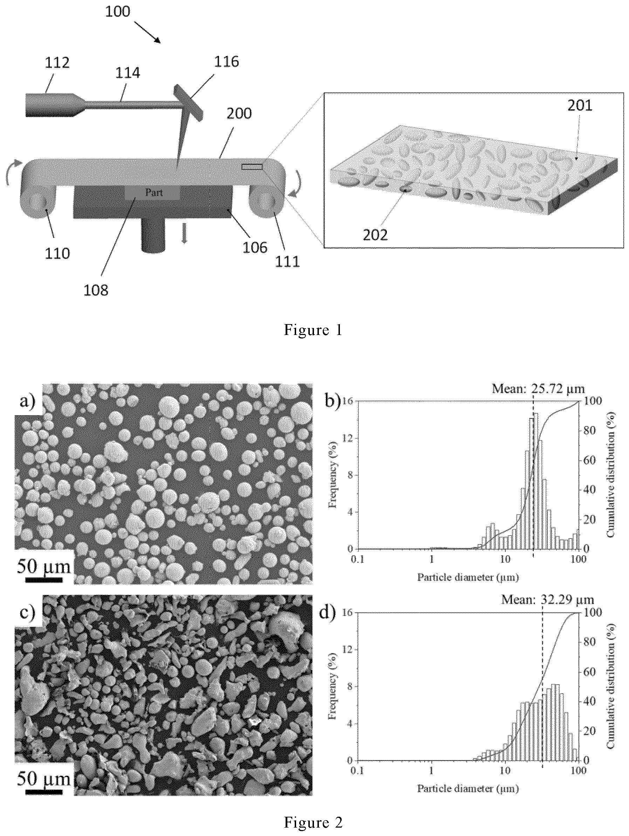

Figure 1 shows an apparatus 100 for use in a method according to an embodiment using a metal powder/polymer composite sheet 200. The apparatus 100 is for forming a part 108 from the composite sheet 200 and comprises: a build plate 106, input roller 110, output roller 111, laser source 112 and scanning mirror 116.

The composite sheet 200 is wrapped around the input roller 110 and is transferred from the input roller 110 to the output roller 111 via a working zone of the apparatus 100 above the build plate 106. Different regions of the composite sheet 200 can successively be placed in the working zone by advancing the input roller 110 (to dispense sheet 200) and the output roller 111 (to take up sheet 200 that has not been formed into part 108 for recycling).

A detail view is shown in Figure 1 of a portion of the composite sheet 200. The composite sheet 200 comprises irregularly shaped (non-spherical) particles bound together by a polymer 201 to form the sheet 200. This is in contrast to the spherical (or near spherical particles) that are typically used in additive layer manufacture (and in prior art methods that use a metal powder polymer composite sheet for additive layer manufacture).

The laser source 112 produces a laser beam 114 that is suitable for heating the composite sheet to a temperature at least high enough to fuse the metal powder thereof. Fusing the metal powder may comprise substantially completely melting a the metal powder in a region of the focus of the laser beam 114. In certain embodiments, the heat necessary to fuse the metal powder will also vaporise the polymer of the composite sheet (by thermal degradation of the polymer) before full melting of the metal powder has occurred. Fusing the metal powder will add the fused metal powder to the part 108. The scanning mirror 116 is configured to direct the laser beam 114 to selected portions of the composite sheet 200 within the working zone above the build plate 106.

Once the laser beam 114 has fused the selected portions of the composite sheet 200, the composite sheet 200 is advanced from the input roller 110 to the output roller 111 to provide a fresh region of the sheet in the working zone. The build plate 106, on which the part 108 is being formed, is lowered with each new layer that is fused and thereby added to the top of the part 108.

Although a laser beam 114 is depicted as the source of the heat for selectively fusing the metal powder 202, any suitable source of directed heat can alternatively be used, for example an electron beam.

The optimum configuration for the laser and laser scanning will depend on the particulars of the process.

In general, a laser power of at least 50W may be used. The laser beam 114 may be focussed on the surface of the composite sheet 200 in the working zone, or may be focussed between 0mm and 10 mm below the surface of the composite sheet 200. The spot size of the laser beam 114 at the point of focus mean be between 20 microns and 150 microns in diameter (FWHM). The laser scanning speed may be between 50mm/s and 1000mm/s. The hatch spacing (i.e. between adjacent scan paths of the laser) may be between 0.05mm and 0.2mm.

For comparison, a "spherical" composite sheet and a "non-spherical" composite sheet were prepared using spherical and non-spherical metal powder (respectively) and the characteristics of parts prepared using both sheets compared. For the spherical composite sheet, gas atomised 304 stainless steel was used. For the non-spherical composite sheet, water atomised 304 stainless steel was used.

By way of demonstration, a 5mm by 5mm plate was manufactured, comprising 30 layers, each formed from a composite sheet according to an embodiment. The nominal thickness of each layer used in example embodiments was 120 microns or 200 microns.

Table 1 below shows process parameters that were used in fabrication.

**Table 1 - Process parameters for additive manufacturing**

| Material | Non-spherical 304 stainless steel |
|---|---|
| Laser beam power (W) | 100 |
| Laser defocus (mm) | 0, -3, -4, -5, -6, -7 |
| Heat source spot diameter ($\mu$m) | 70 |
| Laser scanning speed (mm/s) | 100, 300, 500 |
| Hatch spacing (mm) | 0.1 |

Figure 2 shows particle morphologies for the spherical and non-spherical powders. Figure 2(a) and (c) show SEM images of the spherical and non-spherical powders respectively, and Figures 3(b) and (d) respectively show a histogram and cumulative distribution of particle diameter (in microns) for the spherical and non-spherical powders respectively. The measurements of particle size in Figure 2 were obtained by laser diffraction.

The particle size distribution for the spherical powder has a median value of ~ 25 microns (specifically 26 microns), and the size distribution includes particles of ~1 micron and ~100 micron diameter. The particle size distribution for the non-spherical powder has a similar median value of ~ 30 microns (specifically 32 microns), and the size distribution includes particles of ~1 micron and -100 micron diameter.

A number of different definitions for particle shape factor exist, for example: circularity $\frac{4\pi A}{P^2}$, aspect ratio $\frac{l}{L}$, elongation $log_2\left(\frac{a}{b}\right)$, dispersion $log_2(\pi ab)$, roundness $\frac{r_1}{R}$, flatness $\frac{r_2}{R}$, perimeter to area ratio $\frac{P^2}{A}$, where:

$A$ is the projected area of the particle
$P$ is the perimeter of the particle
$L$ is the major axis length connecting two most distant points on projection area $A$
$l$ is the minor axis length perpendicular to the major axis
$a$ is the major axis length of the Legendre ellipse of the particle
$b$ is the minor axis length of the Legendre ellipse of the particle
$r_1$ is the radius of curvature of the sharpest developed edge of the particle
$r_2$ is the radius of curvature of the most convex direction of the particle
$R$ is the mean radius of the particle.

For convenience, the sphericity of the particles is herein defined by the aspect ratio, since this is convenient to determine from micrographs of particles (from which a projection area of each particle can automatically be determined by edge finding and/or thresholding of the micrograph image).

Table 2 below shows the measured aspect ratio for 20 randomly selected sample particles.

**Table 2 - Spherical and non- spherical aspect ratio measurements.**

| No. | Spherical | | | Non-Spherical | | |
|---|---|---|---|---|---|---|
| | $l$ | $L$ | $l/L$ | $l$ | $L$ | $l/L$ |
| 1 | 17.426 | 17.999 | 0.968165 | 9.803 | 21.997 | 0.445652 |
| 2 | 16.076 | 17.226 | 0.93324 | 12.748 | 19.386 | 0.657588 |
| 3 | 19.817 | 20.197 | 0.981185 | 12.125 | 41.706 | 0.290726 |
| 4 | 26.507 | 27.283 | 0.971557 | 8.753 | 16.346 | 0.535483 |
| 5 | 37.77 | 38.418 | 0.983133 | 15.748 | 24.104 | 0.653336 |
| 6 | 21.989 | 22.778 | 0.965361 | 10.746 | 15.137 | 0.709916 |
| 7 | 36.675 | 38.078 | 0.963155 | 10.275 | 17.702 | 0.580443 |
| 8 | 24.548 | 25.267 | 0.971544 | 18.337 | 32.033 | 0.572441 |
| 9 | 27.392 | 27.22 | 1.006319 | 16.823 | 44.406 | 0.378845 |
| 10 | 20.198 | 20.225 | 0.998665 | 11.858 | 25.169 | 0.471135 |
| 11 | 20.482 | 21.63 | 0.946926 | 15.816 | 23.149 | 0.683226 |
| 12 | 23.56 | 23.578 | 0.999237 | 14.234 | 30.787 | 0.462338 |
| 13 | 20.096 | 20.67 | 0.97223 | 20.341 | 33.141 | 0.613771 |
| 14 | 16.217 | 16.595 | 0.977222 | 17.102 | 23.529 | 0.726848 |
| 15 | 23.548 | 23.568 | 0.999151 | 9.933 | 18 | 0.551833 |
| 16 | 26.273 | 27.182 | 0.966559 | 13.29 | 23.626 | 0.562516 |
| 17 | 25.047 | 25.135 | 0.996499 | 15.036 | 34.933 | 0.430424 |
| 18 | 38.415 | 38.684 | 0.993046 | 11.682 | 18.12 | 0.644702 |
| 19 | 16.204 | 17.165 | 0.944014 | 16.523 | 31.414 | 0.525976 |
| 20 | 17.661 | 17.955 | 0.983626 | 13.98 | 23.505 | 0.594767 |

The mean aspect ratio for the example spherical powder was 0.98 (with a standard deviation of 0.02), and the mean aspect ratio for the non-spherical powder used in this example embodiment was 0.55 (with a standard deviation of 0.11). More generally, non-spherical powder (which has the benefits of greater ease of manufacture and subsequently reduced cost) may be defined as having a mean aspect ratio of less than 0.8 (or less than 0.7, or less than 0.6).

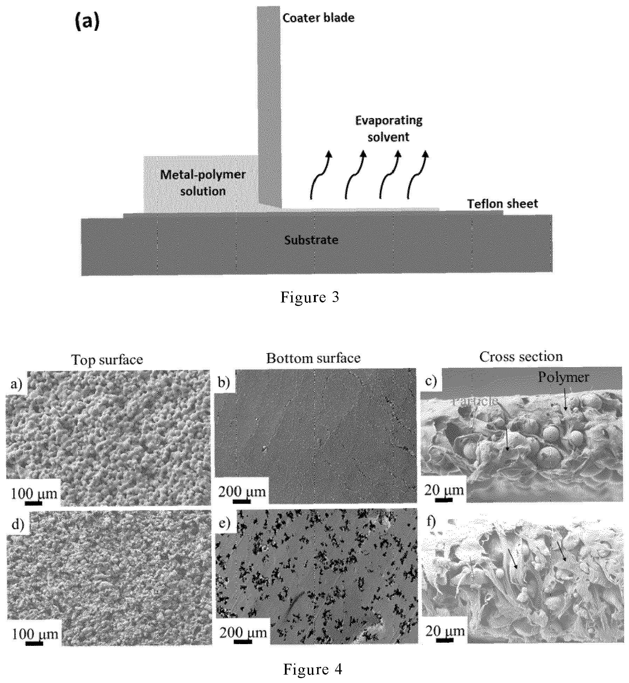

The metal powder-polymer composite sheets 200 in the example were fabricated via solvent casting. A schematic diagram of the process can be seen in Figure 3.

In order to produce the composite sheets 200, 20g of metal powder was mixed with a 10mL solution of polycaprolactone (PCL, 14 wt%), dissolved in chloroform (these parameters can be assumed in subsequent embodiments unless otherwise stated). In general the polymer (e.g. PCL) can be used at a concentration of between about 5 wt% to about 30 wt% with an organic solvent (e.g. chloroform). The metal-polymer dispersion was dispensed along the sidewall of an immobilised 90° bevelled razor blade onto a casting surface (e.g. a PTFE sheet). The metal-polymer solution was dragged by a casting knife or a doctor blade coater at a controlled speed (50mm/s) to spread the dispersed metal-polymer solution uniformly on the PTFE sheet. The gap between the bottom surface of the casting knife and the top of the casting surface may define a nominal thickness for the resulting composite sheet.

Typically a composite sheet can be produced in 10 mins, with the coating step taking ~ 10 seconds and the remainder of the process taken up with solvent evaporation/drying time.

Each side of the resulting composite sheet will typically have a different surface roughness. The side that was in contact with the casting surface will generally feel smoother than the opposite (upper) side. Where the casting surface and the solvent are non-polar (e.g. PTFE and chloroform respectively) the solvent will be drawn to the casting surface side of the metal-polymer mixture. The side that is in contact with the non-polar casting surface will often shows no exposed powder, whereas the opposite side is not confined and will generally have regions in which the powder is relatively exposed, which explains the typically more rough texture. Despite the relatively rough topside, there has been no evidence that the powder can get loose from the metal powder-polymer composite sheet.

Although stainless steel powders were used in the examples, it will be understood that other materials can be used, and the metal powder may comprise or consist of one or more of: stainless steel, tungsten, titanium, titanium alloys, aluminium, aluminium alloys, copper, nickel, nickel alloys, super alloys, high entropy alloys, cobalt-chrome, barium, molybdenum, NiTi (nitilon), NiTi alloys, ceramic materials, metal-ceramic composites, metal-diamond composites, tantalum, tantalum carbide, and combinations thereof.

Similarly, other polymers than PCL can be used, and the polymer may be selected from: a thermoplastic, epoxy, silicone, vulcanised rubber, polyester, polyurethane, polyethylene, polypropylene, polyamide, polyetheramide, polyvinylchloride (PVC), polyvinylidene fluoride (PVDF), a fluoroplastic, polylactic acid (PLA), polycaprolactone (PCL), polybutylene succinate (PBS), polyhydroxyalkanoate (PHA), and poly(3-hydroxybutyrate-co-3- hydroxyhexanoate).

The use of composite sheets with non-spherical metal powders surprisingly produces crack-free dense parts when printed. Table 3 below compares the cost of the raw materials for example powder sheets comprising spherical and non-spherical particles.

**Table 3 - cost comparison of spherical and non-spherical SS304 composite sheets**

| | | | | |
|---|---|---|---|---|
| Spherical powder sheet | Spherical SS304 powder | Unit price (E/kg) | 39.67 | |
| | | Weight (g) required | 133 | |
| | | Subtotal (E) | 5.28 | |
| | PCL polymer | Unit price (E/kg) | 17 | Total: €5.53 |
| | | Weight (g) required | 6.7 | |
| | | Subtotal (E) | 0.11 | |
| 1m×0.2m×200μm | $CHCl_3$ | Unit price (€/L) | 4.2 | |
| | | Weight (ml) required | 33.5 | |
| | | Subtotal (E) | 0.14 | |
| Non-spherical powder sheet 1m×0.2m×200μm | Non-spherical SS304 powder | Unit price (E/kg) | 26 | Total: €3.71 |
| | | Weight (g) required | 133 | |
| | | Subtotal (E) | 3.46 | |
| | PCL polymer | Unit price (E/kg) | 17 | |
| | | Weight (g) required | 6.7 | |
| | | Subtotal (E) | 0.11 | |
| | $CHCl_3$ | Unit price (€/L) | 4.2 | |
| | | Weight (ml) required | 33.5 | |
| | | Subtotal (E) | 0.14 | |

The chemical composition of the spherical and non-spherical particles used in the example are set out below in Table 4:

**Table 4 - Composition analysis of spherical and non-spherical SS304 powders (wt %)**

| | Si | Cr | Ni | Mn | C | O | S | P | Fe |
|---|---|---|---|---|---|---|---|---|---|
| Spherical | 0.45 | 19.41 | 9.78 | 1.12 | 0.018 | 0.037 | 0.004 | 0.010 | Bal. |
| Non-spherical | 0.75 | 17.5-19.5 | 8.0-12.0 | 200 | 0.03 | 0.04 | 0.03 | 0.045 | Bal. |

Figure 4 shows SEM images of: (a) the top surface (powder side), (b) bottom surface (polymer side), and (c) cross section for the spherical powder sheet; and (d) the top surface (powder side), (e) bottom surface (polymer side), and (f) cross section for the non-spherical power sheet.

The cross section illustrates that the polymer connects the metal particles tightly and evenly and in a similar way in both the spherical and non-spherical composite sheets.

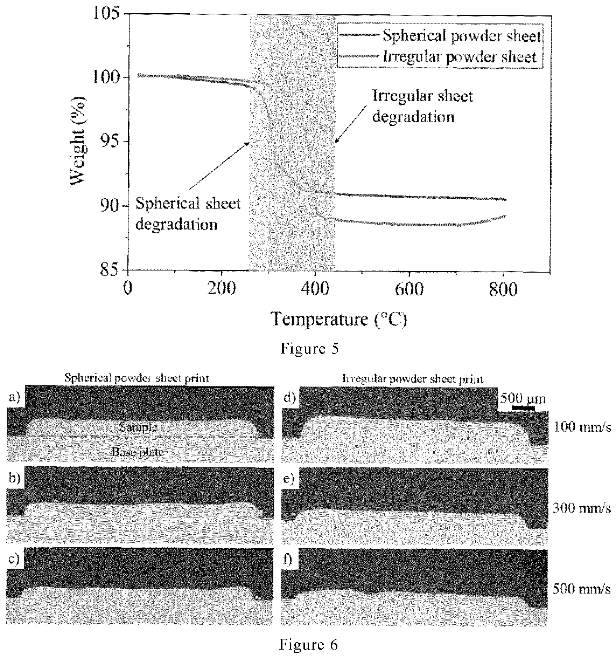

To check the content of the metal powder in the composite sheets and to determine the thermal decomposition temperature of the polymer, thermogravimetric analysis (TGA) of both spherical and non-spherical composite sheets was performed, and the corresponding results are shown in Figure 5. TGA results show that the content of spherical SS304 in the powder sheet was ~ 91 %, which is ~2 % higher than that of the non-spherical SS304 powder sheet. The temperature range over which thermal degradation of the polymer occurs for the two morphologies of powder sheets is slightly different. Thermal degradation of the polymer is influenced by the morphology of the metal powder and the packing density of composite powder sheets. All the polymer degraded completely at temperatures greater than 430 degrees C, for both the spherical and non-spherical SS304 powder sheets.

Referring to Figure 6, a part produced from the non-spherical composite sheet has a very similar density to a part produced from a spherical composite sheet. Only insignificant differences in the density of the powder sheet printed samples was found (see Figure 6 and Table 5). Both spherical and non-spherical powder sheets produce nearly fully dense crack-free metal samples at each of three different laser scanning speeds. For both spherical and non-spherical powder sheets, the total height of the 30-layer sample increased with the decrease of the scanning speed.

Table 5 and 6 below give the density (determined from micrographs) and height for the parts produced from the spherical and non-spherical composite sheets at different laser scan rates.

**Table 5 – Density (%) of a 30-layer sample printed by using 200 μm nominal thickness spherical and non-spherical 304 stainless steel-PCL composite powder sheets.**

| Scanning speed / Morphology | 100 mm/s | 300 mm/s | 500 mm/s |
|---|---|---|---|
| Spherical powder sheet print | 99.96 | 99.98 | 99.92 |
| Non-spherical powder sheet print | 99.89 | 99.95 | 99.76 |

**Table 6 – Measured height (microns) of a 30-layer sample printed by using 200 μm nominal thickness spherical and non-spherical 304 stainless steel-PCL composite powder sheets.**

| Scanning speed / Morphology | 100 mm/s | 300 mm/s | 500 mm/s |
|---|---|---|---|
| Spherical powder sheet print | 373.76±21 | 312.01±26 | 255.47±39 |
| Non-spherical powder sheet print | 498.64±22 | 298.95±3 | 224.88±24 |

The results show that the example composite sheet comprising non-spherical particles is equally suitable for additive layer manufacturing as a composite sheet comprising near-spherical particles (over a range of different process parameters, including different laser scan rates).

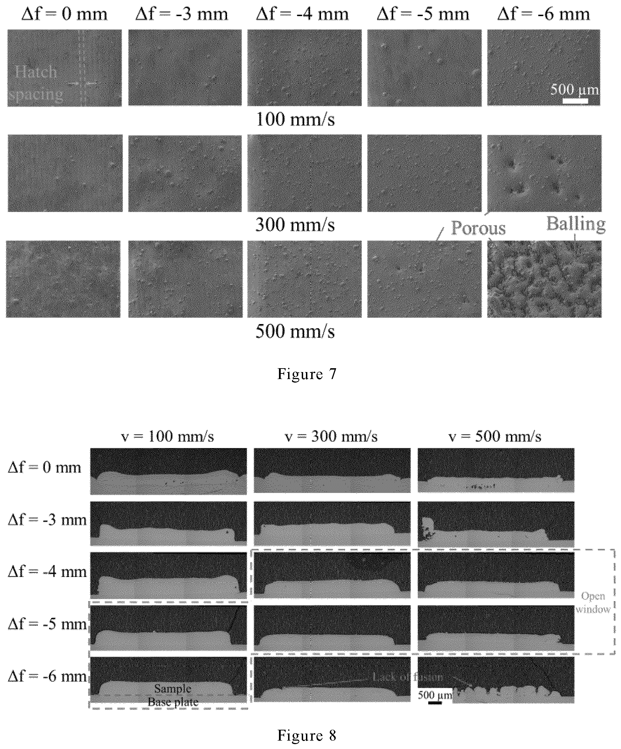

Referring to Figure 7, the top surface of parts formed from non-spherical composite sheets were examined. For laser beam focal planes (Δf) of 0 mm, -3 mm, and -4 mm behind the surface of the layer being irradiated, regardless of the scanning speed, there are no cracks, balling, porosity or other defects at the top surface of printed samples. Porous structure and balling phenomenon were observed at the top surface for -5 mm defocus (scanning speed of 500 mm/s) and -6 mm defocus (300 mm/s and 500 mm/s), which is caused by lack-of-fusion and insufficient energy input.

Referring to Figure 8, cross sections of parts formed from non-spherical composite sheets are shown for different laser scan rates and different laser focal planes. A lack of fusion can be seen at laser scan rates greater than 300 mm/s in combination with focal planes at distances of -6mm or more from the surface of the layer being irradiated. A window of good performance can be seen from Figure 8, in which dense parts are produced at: Δf of -6mm at feed rates of 100mm/s; Δf of -5mm at feed rates of 100mm/s to 500mm/s; Δf of -4mm at feed rates of 300mm/s to 500mm/s.

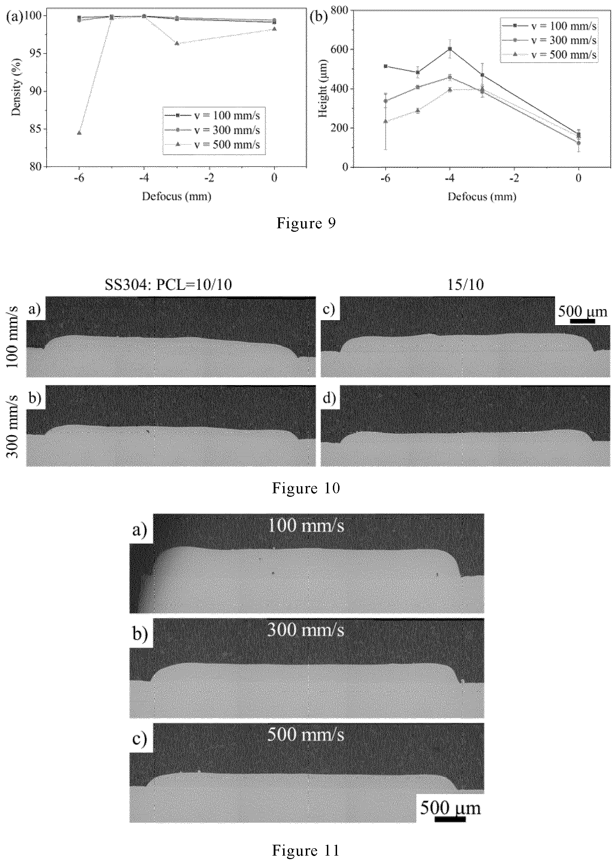

Referring to Figure 9(a), the density of parts formed from the example non-spherical composite sheet with respect to defocus (Δf) is shown for laser scanning rates of 100mm/s, 300mm/s and 500mm/s. The density of the part formed from the non-spherical composite sheet is greater than 99.4 for all defocus distances for scan rates of 100mm/s and 300mm/s.

Referring to Figure 9(b), the part height of parts formed from the example non-spherical composite sheet with respect to defocus (Δf) is shown for laser scanning rates of 100mm/s, 300mm/s and 500mm/s. The part height (also shown in Table 7, below) increased with decreasing scanning rate: for example, at -5 mm defocus printing, the height (482.67±29 microns) of the part formed using a scan rate of 100 mm/s was 67.40 % higher than that of the part formed using the same defocus and a scan rate of 500 mm/s (288.33±12 microns). This is due to more material being entrapped in the melt pool when using a slower scanning speed.

The data used in Figure 9(b) is shown below in Table 7:

**Table 7: Part height with respect to defocus and scan rate**

| Scanning speed / Defocus (mm) | 100 mm/s | 300 mm/s | 500 mm/s |
|---|---|---|---|
| 0 | 167.66±24 | 123.02±46 | 157.00±29 |
| -3 | 469.01±59 | 385.00±28 | 398.67±22 |
| -4 | 602.67±46 | 457.00±15 | 395.33±10 |
| -5 | 482.67±29 | 407.12±8 | 288.33±12 |
| -6 | 513.89±4 | 338.24±33 | 233.05±144 |

Although a specific concentration of 20 g of metal powder in 10 ml of polymer solution was used in the example embodiments described above, non-spherical composite sheets according to embodiments can be formed with other metal:polymer solution ratios.

Figure 10 shows optical micrographs of polished cross sections showing geometry and density of parts formed from different metal:polymer solution ratios and at different laser scan rates using a nominal 200 micron layer thickness. Figure 10(a) shows a metal:polymer solution ratio of 10:10 (g:ml) and a laser scan rate of 100 mm/s, Figure 10(b) shows a metal:polymer solution ratio of 10:10 and a laser scan rate of 300 mm/s, Figure 10(d) shows a metal:polymer solution ratio of 15:10 and a laser scan rate of 100 mm/s, Figure 10(e) shows a metal:polymer solution ratio of 15:10 and a laser scan rate of 300 mm/s. In each case the metal powder used was the same non-spherical SS304 powder described with reference to Figure 2.

Different nominal thicknesses for the composite sheet can be used. In the example embodiments a nominal thickness of 200 microns for the composite sheet was used unless otherwise stated. Figure 11 shows results from using a thicker composite sheet, with a nominal thickness of 250 microns. Optical micrographs are shown for laser scan rates of (a) 100 mm/s, (b) 300 mm/s and (c) 500 mm/s. In each case the change in nominal thickness has not led to any significant adverse effects in the density of the resulting part.

The invention described has the potential to reduce cost of additive layer manufacturing, without adversely affecting performance. The use of less spherical powders for forming layers in a powder bed fusion process without adversely affecting density and consistency represents significant progress in the field of additive manufacturing. Crack-free and dense parts can be manufactured with considerably reduced material cost.

Although example embodiments have been described, variations are possible within the scope of the appended claims. The scope of the invention should be determined with reference to the claims.

## Claims

**1.** A metal powder polymer composite sheet for use in additive layer manufacturing, comprising:

a metal powder;
a polymer that binds the metal powder together to form the sheet;
wherein the metal powder consists of metal particles with a median aspect ratio of less than 0.8.

**2.** The composite sheet of claim 1, wherein the median aspect ratio is less than 0.7.

**3.** The composite sheet of any preceding claim, wherein the metal powder comprises particles with a median particle size of between 10 microns and 100 microns.

**4.** The composite sheet of any preceding claim, wherein the polymer is selected to have a thermal degradation temperature that is lower than a melting temperature of the metal powder.

**5.** The composite sheet of any preceding claim, wherein the metal powder forms at least 80%, or at least 85%, by weight of the composite sheet.

**6.** The composite sheet of any preceding claim, wherein

i) the metal powder comprises or consists of a material selected from: stainless steel, tungsten, titanium, titanium alloys, aluminium, aluminium alloys, copper, nickel, nickel alloys, silver, gold, platinum, lithium, beryllium, magnesium, zinc, zirconium, niobium, tungsten, tin, lead, and their alloys, super alloys, high entropy alloys, cobalt-chrome, barium, molybdenum, NiTi (nitilon), NiTi alloys, ceramic materials, metal-ceramic composites, metal-diamond composites, tantalum, tantalum carbide, tungsten carbide, and combinations thereof; and/or
ii) wherein the polymer comprises or consists of: a thermoplastic, epoxy, silicone, vulcanised rubber, polyester, polyurethane, polyethylene, polypropylene, polyamide, polyetheramide, polyvinylchloride (PVC), polyvinylidene fluoride (PVDF), a fluoroplastic, polylactic acid (PLA), Polyacrylic acid (PAA), Polyvinylpyrrolidone (PVP), polycaprolactone (PCL), polybutylene succinate (PBS), polyhydroxyalkanoate (PHA), and poly(3-hydroxybutyrate-co-3- hydroxyhexanoate).

**7.** The composite sheet of any preceding claim, wherein a first side of the composite sheet is higher in polymer content than a second, opposite, side of the composite sheet and/or wherein a surface roughness of the first side is at least 5% lower than a surface roughness of the second side.

**8.** The composite sheet of any preceding claim, wherein a thickness of the sheet is between 20 microns and 400 microns.

**9.** A method of manufacturing a component using the composite sheet of any preceding claim, the method comprising:

a) arranging a region of the composite sheet in a working zone above a build plate;
b) applying heat to selected portions of the region of the composite sheet until a fusion temperature of the metal powder is achieved;
c) removing the region of the composite sheet from the working zone;
d) repeating steps a) to c) until the component has been built, layer by layer, from the selected portions.

**10.** The method of claim 9, wherein the source of the heat is at least one of:

i) a laser beam;
ii) an electron beam
iii) a CO2 laser, a 1064 nm infrared Nd:YAG laser, an infrared fibre laser, a diode laser, an argon laser, a krypton laser, an argon/krypton laser, a helium-cadmium laser, a copper vapor laser, a xenon laser, an iodine laser, an oxygen laser, or an excimer laser.

**10.** The method of any of claims 9 to 10, wherein the composite sheet is arranged on input roller, and is provided to the working zone by unrolling the composite sheet from the input roller.

**11.** The method of claim 10, wherein the composite sheet is further disposed on an output roller, wherein the composite sheet is received for recycling on the output roller after removal from the working zone.

**12.** A method of manufacturing the composite sheet of any of claims 1 to 8, comprising:

dissolving between about 5 wt% and about 50 wt% of a polymer in an organic solvent to form a polymer solution;
dispersing a metal powder in the polymer solution in a ratio of metal powder to polymer solution of about 10g:2ml to about 2g: 10ml to form a metal-dispersed solution;

casting the metal-dispersed solution on to a casting surface; and
drying the cast metal-dispersed solution to form the composite sheet.

**13.** The method of claim 12, wherein the metal powder originates from a water atomisation process.

**14.** The method of claim 12 or 13, wherein:

i) the organic solvent is selected from acetone, chloroform, N-methyl formamide, tetrahydrofuran, cyclohexane, dimethylacetamide, dimethylsulphoxide, dimethylformamide, butanol, ethanol, methyl ethyl ketone, and diacetone alcohol; and/or
ii) the metal powder comprises or consists of a material selected from: stainless steel, tungsten, titanium, titanium alloys, aluminium, aluminium alloys, copper, nickel, nickel alloys, silver, gold, platinum, lithium, beryllium, magnesium, zinc, zirconium, niobium, tungsten, tin, lead, and their alloys, super alloys, high entropy alloys, cobalt-chrome, barium, molybdenum, NiTi (nitilon), NiTi alloys, ceramic materials, metal-ceramic composites, metal-diamond composites, tantalum, tantalum carbide, and combinations thereof.

**15.** The method of any of claims 15 to 17, wherein:

i) the polymer solution is between about 5 wt% and about 30 wt% polycaprolactone in chloroform; or
ii) wherein the polymer solution is between about 5 wt% and about 30 wt% polyvinylidene fluoride in acetone.

Figure 1

Figure 2

**(a)**

Coater blade

Evaporating solvent

Metal-polymer solution

Teflon sheet

Substrate

Figure 3

Top surface

Bottom surface

Cross section

a)

100 μm

b)

200 μm

c)

Polymer

20 μm

d)

100 μm

e)

200 μm

f)

20 μm

Figure 4

Figure 5

Figure 6

Δf = 0 mm    Δf = -3 mm    Δf = -4 mm    Δf = -5 mm    Δf = -6 mm

100 mm/s

300 mm/s

500 mm/s

Figure 7

Figure 8

Figure 9

Figure 10

Figure 11

Europäisches
Patentamt
European
Patent Office
Office européen
des brevets

# EUROPEAN SEARCH REPORT

**Application Number**

EP 23 19 5264

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/110587 A1 (ARAMAKI KEISUKE [JP] ET AL) 30 April 2009 (2009-04-30) | 1-8, 12-14 | INV. B22F10/20 |
| Y | * paragraphs [0024], [0027], [0030], [0033], [0040], [0053], [0054] * * claim 1 * | 15 | B22F1/06 B22F1/10 B22F12/50 B33Y10/00 |
| Y | WO 2023/161257 A1 (THE PROVOST FELLOWS SCHOLARS AND OTHER MEMBERS OF BOARD OF TRINITY COL) 31 August 2023 (2023-08-31) | 15 | B33Y30/00 B33Y70/00 |
| A | * claims 1,2,11,12,15,18,21 * * figure 2(e) * | 9-11 | |
| A | Anonymous: "Promoting Powder Metallurgy Technology INTRODUCTION TO ADDITIve MANUfACTURINg TeCHNOLOgY", , 1 April 2013 (2013-04-01), XP055295594, Retrieved from the Internet: URL:http://www.sf2m.asso.fr/CommissionsThematiques/DocComThematiques/EPMA_Additive_Manufacturing.pdf [retrieved on 2016-08-16] * section 3.3.3 * | 1-15 | |
| T | Bharat Bhushan: "Chapter 2 - Surface Roughness Analysis and Measurement Techniques" In: "Modern Tribology Handbook Volume One", 28 December 2000 (2000-12-28), CRC Press, XP055365111, ISBN: 978-0-8493-7787-7 pages 49-119, * sections 2.2.4.1, 2.2.4.2 and 2.3.8 * | | |

-/--

**TECHNICAL FIELDS SEARCHED (IPC)**

B22F
B33Y
B29C
B28B
C04B

The present search report has been drawn up for all claims

| Place of search | Date of completion of the search | Examiner |
|---|---|---|
| The Hague | 29 January 2024 | Järvi, Tommi |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 23 19 5264

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | RENLIANG XU ET AL: "Comparison of sizing small particles using different technologies", POWDER TECHNOLOGY, ELSEVIER, BASEL (CH), vol. 132, no. 2-3, 24 June 2003 (2003-06-24), pages 145-153, XP002711749, ISSN: 0032-5910, DOI: 10.1016/S0032-5910(03)00048-2 * abstract * * table 6 * * figure 1 * * section 4 * | | |
| T | ERIC OLSON: "Particle Shape Factors and Their Use in Image Analysis - Part 1: Theory", JOURNAL OF GXP COMPLIANCE, vol. 15, no. 3, 1 January 2011 (2011-01-01), pages 85-96, XP055305841, US ISSN: 1552-5791 Retrieved from the Internet: URL:http://www.ivtnetwork.com/sites/default/files/ImageAnalysis_01.pdf> * page 86 * | | |

TECHNICAL FIELDS SEARCHED (IPC)

The present search report has been drawn up for all claims

| Place of search | Date of completion of the search | Examiner |
|---|---|---|
| The Hague | 29 January 2024 | Järvi, Tommi |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.............................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 19 5264

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2024

| Patent document cited in search report | Publication date | Patent family member(s) | | Publication date |
|---|---|---|---|---|
| US 2009110587 A1 | 30-04-2009 | CN | 101536125 A | 16-09-2009 |
| | | HK | 1133949 A1 | 09-04-2010 |
| | | KR | 20090023413 A | 04-03-2009 |
| | | US | 2009110587 A1 | 30-04-2009 |
| | | WO | 2008053662 A1 | 08-05-2008 |
| WO 2023161257 A1 | 31-08-2023 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020165193 A